# EUROPEAN PATENT SPECIFICATION

(11) **EP 4 063 174 B1**
(45) Date of publication and mention of the grant of the patent: **08.11.2023**
(21) Application number: 21214031.3
(22) Date of filing: 13.12.2021
(51) Int. Cl.: B60L 15/10, B60L 15/20, B60L 7/10, B60W 30/18

(54) **CONTROL DEVICE FOR VEHICLE**
STEUERUNGSVORRICHTUNG FÜR EIN FAHRZEUG
DISPOSITIF DE COMMANDE POUR VÉHICULE

(30) Priority: 12.01.2021 JP 2021003079
(43) Date of publication of application: 28.09.2022
(73) Proprietor: Suzuki Motor Corporation, Shizuoka 432-8611 (JP)
(72) Inventor: SHIMADA, Takashi, Shizuoka, 432-8611 (JP)
(74) Representative: Henkel & Partner mbB

(56) References cited:
- WO-A1-2020/026621
- DE-A1-102017 222 305
- JP-A- 2018 176 810
- US-A1- 2013 297 110

## Description

### [Technical Field]

The present invention relates to a control device for a vehicle.

### [Background Art]

Conventionally, a technology described in JP2013-71585A is known as a control device for a vehicle that is mounted on a vehicle such as an automobile. In the technology described in JP2013-71585A, in a vehicle including an engine and a motor generator, at the time of a coast traveling, the fuel supply to the engine is stopped, the opening degree of an electronically controlled throttle valve of the engine is increased, and a regeneration behavior is performed by the motor generator. Further, in the technology described in JP2013-71585A, a regenerative torque to balance with the magnitude of a temporarily excessive engine torque that is generated at the time of the restart of the fuel supply is estimated based on the rotation number of the engine and the opening degree of the electronically controlled throttle valve just before the end of the regeneration behavior, and the estimated regenerative torque is generated by the motor generator after the transition to powering.

Thereby, in the technology described in JP2013-71585A, it is possible to restrain a shock to be generated in the vehicle due to the temporarily excessive engine torque that is generated at the time of the restart of the fuel supply just after the transition from the regeneration to the powering.

### [Citation List]

### [Patent Literature]

[Patent Literature 1] JP2013-71585A

### [Summary of Invention]

### [Technical Problem]

However, in the conventional technology described in JP2013-71585A, in the case where the regenerative torque at the time of the coast traveling is high, the deceleration of the vehicle speed is high, and a driver needs to frequently depress an accelerator pedal to perform the end of the regeneration and the restart of the fuel supply. Therefore, there is a problem in that it is not easy for the driver to adjust the vehicle speed. On the other hand, in the case where the regenerative torque at the time of the coast traveling is low, there is a problem in that it is not possible to secure an appropriate regeneration amount (electricity generation amount).

The present invention has been made in view of the above problems, and has an object to provide a control device for a vehicle that makes it possible to adjust the deceleration while securing the regeneration amount.

### [Solution to Problem]

The present invention is a control device for a vehicle, the control device being mounted on the vehicle, the vehicle including an engine and a rotating electric machine capable of performing regeneration, the control device including a control unit that executes a fuel cut of the engine and the regeneration of the rotating electric machine at time of a coast traveling in which an accelerator operation is not performed, the control device being characterized in that: when the accelerator operation is performed during the execution of the fuel cut and the regeneration and an operation amount of the accelerator operation is smaller than a predetermined accelerator operation amount, the control unit maintains the fuel cut, and decreases a regeneration amount of the regeneration depending on increase in the operation amount of the accelerator operation; and when the operation amount of the accelerator operation reaches the predetermined accelerator operation amount, the control unit ends the fuel cut, and increases the regeneration amount.

### [Advantageous Effect of Invention]

Thus, the above present invention can provide a control device for a vehicle that makes it possible to adjust the deceleration while securing the regeneration amount.

### [Brief Description of Drawings]

[Figure 1] Figure 1 is a configuration diagram of a vehicle including a control device according to a first embodiment or second embodiment of the present invention.
[Figure 2] Figure 2 is a flowchart for describing a behavior of the control device for the vehicle according to the first embodiment of the present invention.
[Figure 3] Figure 3 is a timing chart for describing the behavior of the control device for the vehicle according to the first embodiment of the present invention.
[Figure 4] Figure 4 is a flowchart for describing a behavior of the control device for the vehicle according to the second embodiment of the present invention.
[Figure 5] Figure 5 is a timing chart for describing the behavior of the control device for the vehicle according to the second embodiment of the present invention.

### [Description of Embodiment]

A control device for a vehicle according to an embodiment of the present invention is a control device for a vehicle, the control device being mounted on the vehicle, the vehicle including an engine and a rotating electric machine capable of performing regeneration, the control device including a control unit that executes a fuel cut of the engine and the regeneration of the rotating electric machine at time of a coast traveling in which an accelerator operation is not performed, the control device being characterized in that: when the accelerator operation is performed during the execution of the fuel cut and the regeneration and an operation amount of the accelerator operation is smaller than a predetermined accelerator operation amount, the control unit maintains the fuel cut, and decreases a regeneration amount of the regeneration depending on increase in the operation amount of the accelerator operation; and when the operation amount of the accelerator operation reaches the predetermined accelerator operation amount, the control unit ends the fuel cut, and increases the regeneration amount. Thereby, the control device for the vehicle according to the embodiment of the present invention makes it possible to adjust the deceleration while securing the regeneration amount.

### [Embodiment 1]

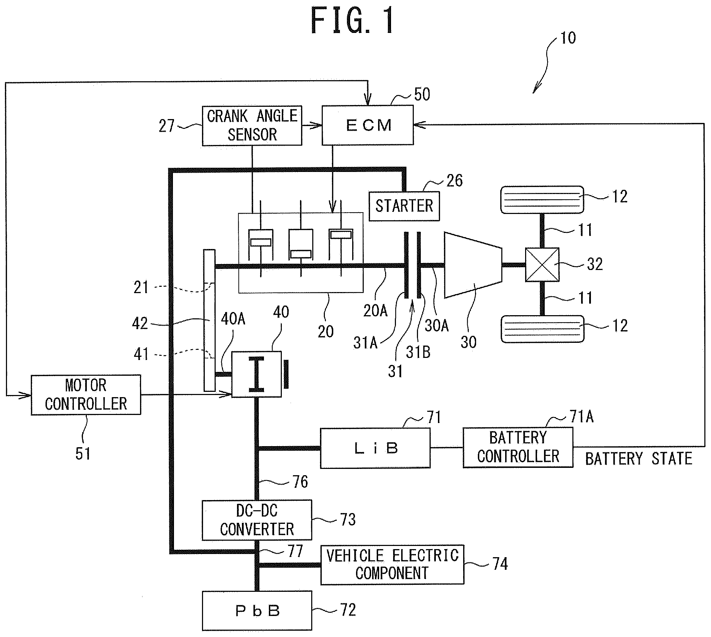

A control device for a vehicle according to a first embodiment of the present invention will be described below with use of drawings. Figure 1 to Figure 3 are figures for describing the control device for the vehicle according to the first embodiment of the present invention.

As shown in Figure 1, a vehicle 10 is configured to include an engine 20, an ISG (Integrated Starter Generator) 40 as a motor, a gear shifter 30, wheels 12, an ECM (Electronic Control Module) 50 as a control unit, and a motor controller 51.

In the engine 20, a plurality of cylinders is formed. In the embodiment, the engine 20 is configured to perform a sequence of four strokes including an intake stroke, a compression stroke, an expansion stroke, and an exhaust stroke, for each cylinder.

In the engine 20, a crank angle sensor 27 as an engine speed detection unit is provided, and the crank angle sensor 27 detects an engine speed based on the rotational position of a crankshaft 20A, and sends a detection signal to the ECM 50.

The gear shifter 30 changes the speed of the rotation transmitted from the engine 20, and drives the wheels 12 through drive shafts 11.

The vehicle 10 includes a clutch 31 between the engine 20 and the gear shifter 30, and the clutch 31 is a dry-type single plate clutch. The clutch 31 includes a flywheel 31A connected with the crankshaft 20A of the engine 20 and a clutch disc 31B connected with an input shaft 30A of the gear shifter 30.

The clutch 31 is switched to a power transmission state when the clutch disc 31B is frictionally engaged with the flywheel 31A, and is switched to a power non-transmission state when the clutch disc 31B is separated from the flywheel 31A.

The vehicle 10 includes a differential device 32 between the gear shifter 30 and the drive shafts 11, and the differential device 32 transmits the rotation transmitted from the gear shifter 30, to the left and right drive shafts 11, such that differential rotation can be performed.

The vehicle 10 includes a starter 26, and the starter 26 rotates the flywheel 31A connected with the crankshaft 20A, in response to a command from the ECM 50, and thereby performs the first start-up of the engine 20.

The ISG 40 is a rotating electric machine having a function of an electric motor that generates motive power by the supply of electric power and a function of an electric generator that generates electricity by the motive power from the exterior. In this way, the ISG 40 is a rotating electric machine that can perform regeneration and powering. Here, a torque (hereinafter also referred to as an ISG torque) to be generated by the ISG 40 is a positive torque when the ISG 40 functions as an electric motor and performs the powering, and is a negative torque when the ISG 40 functions as an electric generator and performs the regeneration.

The ISG 40 is constantly connected with the engine 20 through a winding power train constituted by a pulley 41, a crank pulley 21, and a belt 42, and mutually transmits motive power with the engine 20. More specifically, the ISG 40 includes a rotation shaft 40A, and the pulley 41 is fixed to the rotation shaft 40A.

The crank pulley 21 is fixed to the other end portion of the crankshaft 20A of the engine 20.

The belt 42 is wound around the crank pulley 21 and the pulley 41. As the winding power train, a sprocket and a chain can be used.

The motive power generated by the ISG 40 is transmitted to the wheels 12 through the crankshaft 20A of the engine 20, the gear shifter 30, and the drive shafts 11. Further, the rotation of the wheels 12 is transmitted to the ISG 40 through the drive shafts 11, the gear shifter 30, and the crankshaft 20A of the engine 20, and is used for the regenerative electricity generation in the ISG 40.

Accordingly, the vehicle 10 can realize not only a traveling by the motive power of the engine 20 but also a traveling in which the engine 20 is assisted by the motive power of the ISG 40. Furthermore, the vehicle 10 can travel by the motive power of the ISG 40, in a state where the operation of the engine 20 is stopped.

In this way, the vehicle 10 is configured as a parallel hybrid system that can travel using at least one motive power of the motive power of the engine 20 and the motive power of the ISG 40.

The torque and rotation speed of the ISG 40 are controlled by the motor controller 51. The motor controller 51 is electrically connected with the ECM 50, and controls the behavior of the ISG 40 based on a command from the ECM 50.

The vehicle 10 includes a lithium-ion battery 71 (shown as LiB in the figure), a lead battery (shown as PbB in the figure), a DC-DC converter 73, and a vehicle electric component 74. The lithium-ion battery 71 and the lead battery 72 are rechargeable secondary batteries.

For the lithium-ion battery 71, the number of cells, and the like are set such that an output voltage of about 48 V is generated. For the lead battery 72, the number of cells, and the like are set such that an output voltage of about 12 V is generated. The vehicle electric component 74 is a generic term of various electric components that work at about 12 V, and for example, includes a wiper, a head light, a car navigation system, and the like.

The DC-DC converter 73 is electrically connected with the lithium-ion battery 71 and the ISG 40 through a 48-V bus 76. Further, the DC-DC converter 73 is electrically connected with the lead battery 72 and the vehicle electric component 74 through a 12-V bus 77. In the embodiment, a 48-V hybrid system is mounted on the vehicle 10, and the ISG 40 works at 48 V. The DC-DC converter 73 mutually converts voltages between the 48-V bus 76 and the 12-V bus 77.

In the embodiment, because of working at the voltage of 48 V, the ISG 40 can generate a higher torque, compared to the case of working at the voltage of 12 V. Further, the DC-DC converter 73 can convert 48 V into 12 V, and therefore can cause existing electric components to work at the voltage of 12 V. Further, it is possible to restrain electric current flow and heat generation in the 48-V bus 76 and the like, and to reduce the weight of the 48-V bus 76 and the like.

Further, it is possible to cause the lithium-ion battery 71 to serve for the supply of electric power to the ISG 40 and cause the lead battery 72 to serve for the supply of electric power to the vehicle electric component 74, and therefore it is possible to decrease the capacity of the DC-DC converter 73.

The lithium-ion battery 71 is provided with a battery controller 71A, and the battery controller 71A detects the inter-terminal voltage, surrounding temperature, and input-output electric current of the lithium-ion battery 71, and outputs a detection signal to the ECM 50.

The ECM 50 detects a state-of-charge (SOC) based on the inter-terminal voltage, surrounding temperature, and input-output electric current of the lithium-ion battery 71. The state-of-charge of the lithium-ion battery 71 is managed by the ECM 50, so as to be in a predetermined management range (for example, in a range of 30% to 70%).

The ECM 50 is configured by a computer unit including a CPU (Central Processing Unit), a RAM (Random Access Memory), a ROM (Read Only Memory), a flash memory for saving backup data and the like, an input port, and an output port.

In the ROM of the computer unit, programs for causing the computer unit to function as the ECM 50 are stored along with various constants, various maps, and the like. That is, the CPU executes the programs stored in the ROM, using the RAM as a working area, and thereby the computer unit functions as the ECM 50 in the embodiment.

The ECM 50 is connected with various sensors including the crank angle sensor 27 and the battery controller 71A. Further, the ECM 50 is connected with various controlled objects including the engine 20. The ECM 50 controls various controlled object based on information obtained from the various sensors.

Furthermore, the ECM 50 is connected with the ISG 40 through the motor controller 51, and the ECM 50 controls the ISG 40 by functioning as a superior controller for the motor controller 51.

In the embodiment, the ECM 50 executes the fuel cut of the engine 20 and the regeneration of the ISG 40 at the time of the coast traveling in which the accelerator operation is not performed. The fuel cut means that the fuel supply to the engine 20 is stopped. By performing the fuel cut at the time of the coast traveling of the vehicle 10, it is possible to improve the fuel efficiency. Further, by performing the regeneration of the ISG 40 at the time of the coast traveling of the vehicle 10, it is possible to store the electric power generated by the regeneration in the lithium-ion battery 71. As the regenerative torque of the ISG 40 is higher, the amount (regeneration amount) of the electric power that is generated is larger.

In the embodiment, the ISG 40 can generate a high motor torque at the time of the powering, by the voltage of 48 V. Meanwhile, the maximal regenerative torque of the ISG 40 is higher, compared to a 12-V hybrid system. Therefore, in the case where the ISG 40 performs the regeneration behavior at the constant maximal regenerative torque at the time of the coast traveling of the vehicle 10, the deceleration of the vehicle speed sometimes becomes excessively large, compared to the 12-V hybrid system. Against this, a driver can restrain the decrease in the vehicle speed or can increase the vehicle speed, by depressing the accelerator pedal to generate the engine torque. However, it is necessary to frequently repeat the depression and release of the accelerator pedal, and it is difficult to adjust the vehicle speed, so that drivability is reduced.

Hence, in the embodiment, when the accelerator operation is performed at the time of the coast traveling of the vehicle 10, the ECM 50 maintains the fuel cut, and adjusts the regeneration amount depending on increase in the operation amount (hereinafter also referred to as an accelerator operation amount) of the accelerator operation.

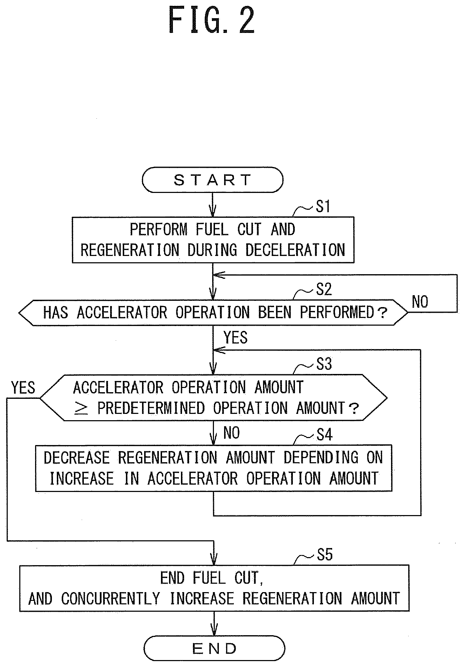

A behavior of the ECM 50 of the vehicle 10 configured as described above will be described with reference to a flowchart shown in Figure 2. The behavior in Figure 2 is repeatedly executed with a predetermined period.

In Figure 2, the ECM 50 performs the fuel cut and the regeneration during the deceleration of the vehicle speed (step S1). Here, the ECM 50 executes the fuel cut of the engine 20 and the regeneration of the ISG 40, in the case where the acceleration operation is not being performed and where the vehicle 10 is performing the coast traveling. The regeneration amount at this time is a predetermined maximal regeneration amount.

Next, the ECM 50 repeatedly determines whether the accelerator operation has been performed (step S2). Then, when the accelerator operation has been performed, the ECM 50 determines whether the accelerator operation amount is equal to or larger than a predetermined accelerator operation amount (shown as predetermined operation amount in the figure) (step S3).

In the case where the accelerator operation amount is smaller than the predetermined accelerator operation amount (NO in step S3), the ECM 50 decreases the regeneration amount depending on the increase in the accelerator operation amount (step S4). That is, the ECM 50 controls the ISG 40 such that the regeneration amount decreases as the accelerator operation amount is larger. Thereby, as the accelerator operation amount is larger, the regenerative torque (negative traveling torque) of the ISG 40 decreases and the deceleration of the vehicle 10 becomes gentler. The ECM 50 decreases the regeneration amount in step S4, and thereafter returns to step S3. Accordingly, in the case where the accelerator operation has been performed during the coast traveling, the deceleration of the vehicle 10 becomes gentler as the accelerator operation amount is larger.

On the other hand, in the case where the accelerator operation amount is equal to or larger than the predetermined accelerator operation amount (YES in step S3), the ECM 50 ends the fuel cut, and concurrently, increases the regeneration amount (step S5). More specifically, in the case where the accelerator operation amount has reached the predetermined accelerator operation amount, the ECM 50 ends the fuel cut, and increases the regeneration amount to the predetermined maximal regeneration amount. In the embodiment, in the case where the accelerator operation amount further increases after reaching the predetermined operation amount, the ECM 50 decreases the regeneration amount from the predetermined maximal regeneration amount, depending on the increase amount of the accelerator operation amount from the predetermined operation amount.

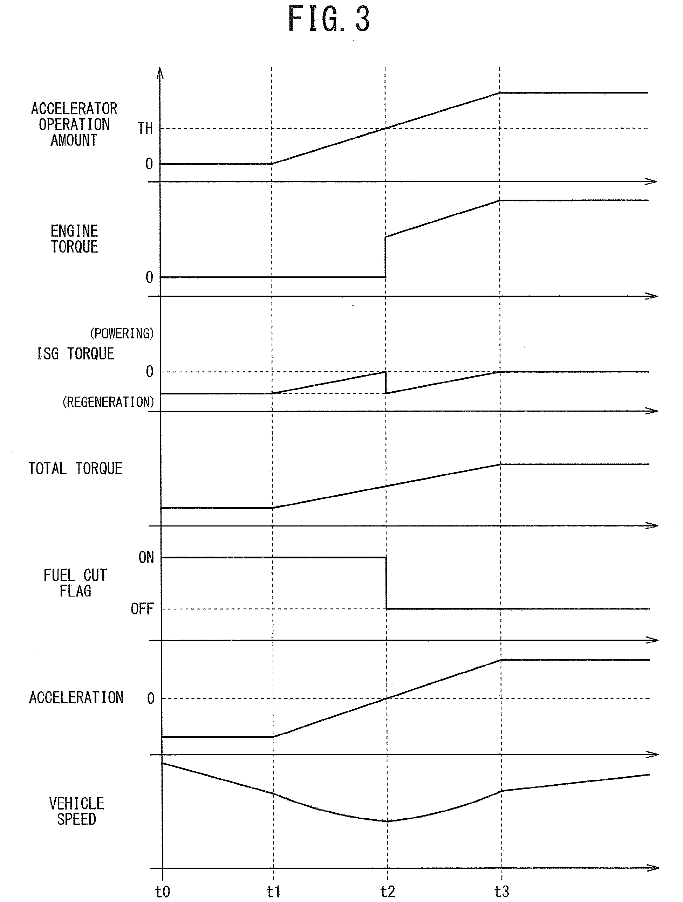

Next, a temporal change in vehicle state when the behavior in the flowchart of Figure 2 is performed will be described with reference to a timing chart of Figure 3. Figure 3 shows temporal changes in the accelerator operation amount, the engine torque, the ISG torque, a total torque, a fuel cut flag, the acceleration of the vehicle 10, and the vehicle speed.

In Figure 3, in an initial state at time t0, the vehicle 10 is performing the coast traveling. In this state, the accelerator operation amount is zero, and the fuel cut flag is set to ON. Therefore, the fuel cut is executed, and the engine torque is zero. Further, the ISG 40 is controlled such that the ISG torque is on the regeneration side. Accordingly, due to so-called engine brake and the regenerative torque, the acceleration of the vehicle 10 is a negative value, and the vehicle speed gradually decreases.

Thereafter, at time t1, the accelerator operation is performed, and thereby the regenerative torque is decreased depending on the increase in the accelerator operation amount, while the fuel cut is maintained. Thereby, the negative acceleration of the vehicle 10 decreases toward zero. In other words, the deceleration of the vehicle speed decreases.

Thereafter, at time t2, the accelerator operation amount reaches the predetermined accelerator operation amount (shows as TH in the figure), and thereby the fuel cut flag is set to OFF, so that the engine torque is generated. Further, the ISG torque is temporarily set to the maximal regenerative torque. At time t2, the engine torque sharply increased with the start-up of the engine 20 due to the restart of the fuel supply is offset by the maximal regenerative torque. Further, from time t2, the total torque of the ISG torque and the engine torque becomes a positive value, and therefore the acceleration of the vehicle becomes a positive value.

Thereafter, as the accelerator operation amount increases, the ISG torque decreases from the maximal regenerative torque. Then, at time t3, the regenerative torque becomes zero again.

As described above, in the embodiment, in the case where the accelerator operation has been performed during the execution of the fuel cut and the regeneration and where the operation amount of the accelerator operation is smaller than the predetermined accelerator operation amount, the ECM 50 maintains the fuel cut, and decreases the regeneration amount of the regeneration depending on the increase in the operation amount of the accelerator operation. Then, in the case where the operation amount of the accelerator operation has reached the predetermined accelerator operation amount, the ECM 50 ends the fuel cut, and increases the regeneration amount.

Thereby, in the case where the accelerator operation has been performed at the time of the coast traveling of the vehicle 10, the regeneration amount decreases depending on the increase in the operation amount of the accelerator operation, and therefore it is possible to adjust the deceleration of the vehicle 10.

As a result, it is possible to adjust the deceleration while securing the regeneration amount. Further, it is possible to adjust the deceleration to a desired deceleration by keeping the accelerator operation amount constant, and therefore it is not necessary to frequently depress or release the accelerator pedal, so that it is possible to improve the drivability.

Further, in the case where the operation amount of the accelerator operation has reached the predetermined accelerator operation amount, the fuel cut is ended and the regeneration amount is increased. Thereby, it is possible to cancel out the shock due to the sharp increase in the engine torque, by the regenerative torque, so that it is possible to improve the drivability.

Further, in the embodiment, the predetermined accelerator operation amount is set to an operation amount when the regeneration amount decreases to zero.

Thereby, it is possible to smooth the change in the total torque before the accelerator operation amount reaches the predetermined accelerator operation amount, so that it is possible to improve the drivability.

Further, in the embodiment, the regeneration amount when the accelerator operation is not being performed is set to the predetermined maximal regeneration amount. Then, in the case where the operation amount of the accelerator operation has reached the predetermined accelerator operation amount, the ECM 50 ends the fuel cut, and increases the regeneration amount to the maximal regeneration amount.

Thereby, it is possible to surely offset the engine torque sharply increased with the start-up of the engine 20, by the regenerative torque having the maximal regeneration amount, so that it is possible to improve the drivability.

### [Embodiment 2]

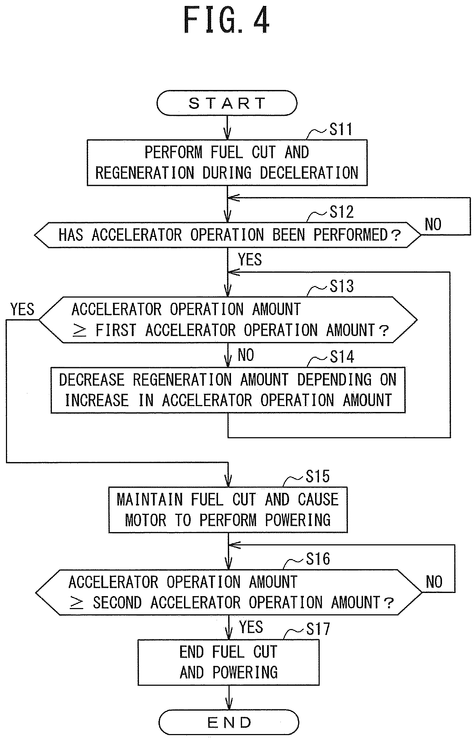

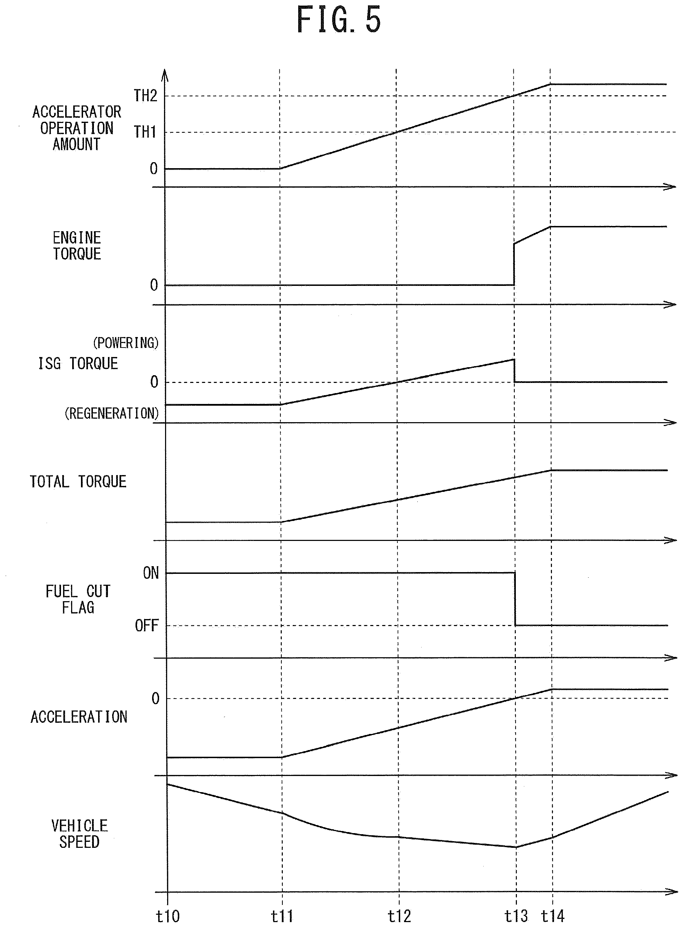

Next, a control device for a vehicle according to a second embodiment of the present invention will be described with use of drawings. In the same configuration as that in the first embodiment shown in Figure 1, the control device for the vehicle in the embodiment has a different control content, and therefore the control content will be described. Figure 4 and Figure 5 are a flowchart and a timing chart for describing a behavior of the control device for the vehicle according to the second embodiment of the present invention.

The behavior of the ECM 50 in the present embodiment will be described with reference to the flowchart shown in Figure 4. The behavior in Figure 4 is repeatedly executed with a predetermined period.

In Figure 4, the ECM 50 performs the fuel cut and the regeneration during the deceleration of the vehicle speed (step S11). Here, the ECM 50 executes the fuel cut of the engine 20 and the regeneration of the ISG 40, in the case where the acceleration operation is not being performed and where the vehicle 10 is performing the coast traveling. The regeneration amount at this time is the predetermined maximal regeneration amount.

Next, the ECM 50 repeatedly determines whether the accelerator operation has been performed (step S12).

Then, when the accelerator operation has been performed, the ECM 50 determines whether the accelerator operation amount is equal to or larger than a first accelerator operation amount (step S13).

In the case where the accelerator operation amount is smaller than the first accelerator operation amount (NO in step S13), the ECM 50 decreases the regeneration amount depending on the increase in the accelerator operation amount (step S14). That is, in the case where the accelerator operation has been performed during the execution of the fuel cut and the regeneration, the ECM 50 controls the ISG 40 such that the regeneration amount decreases as the accelerator operation amount increases. Thereby, as the accelerator operation amount increases, the regenerative torque (negative traveling torque) of the ISG 40 decreases and the deceleration of the vehicle 10 becomes gentler. The decrease rate of the regenerative torque is set such that the regenerative torque becomes zero when the accelerator operation amount reaches the first accelerator operation amount.

On the other hand, in the case where the accelerator operation amount is equal to or larger than the first accelerator operation amount (YES in step S13), the ECM 50 maintains the fuel cut, and causes the ISG 40 (shown as motor in the figure) to perform the powering (step S15). The powering torque of the ISG 40 at this time is a low torque by which the deceleration of the vehicle 10 is weakened. A manner of performing the coast traveling while generating the powering torque is referred to as an EV coast.

Next, the ECM 50 repeatedly determines whether the accelerator operation amount is equal to or larger than a second accelerator operation amount (step S16). The second accelerator operation amount is set to a value larger than the first accelerator operation amount.

In the case where the accelerator operation amount is equal to or larger than the second accelerator operation amount (YES in step S16), the ECM 50 ends the fuel cut of the engine 20 and the powering of the ISG 40 (step S17).

Next, a temporal change in vehicle state when the behavior in the flowchart of Figure 4 is performed will be described with reference to the timing chart of Figure 5. Figure 5 shows temporal changes in the accelerator operation amount, the engine torque, the ISG torque, the total torque, the fuel cut flag, the acceleration of the vehicle 10 and the vehicle speed.

In Figure 5, in an initial state at time t10, the vehicle 10 is performing the coast traveling. In this state, the accelerator operation amount is zero, and the fuel cut flag is set to ON. Therefore, the fuel cut is executed, and the engine torque is zero. Further, the ISG 40 is controlled such that the ISG torque is on the regeneration side. Accordingly, due to the so-called engine brake and the regenerative torque, the acceleration of the vehicle 10 is a negative value, and the vehicle speed gradually decreases.

Thereafter, at time t11, the accelerator operation is performed, and thereby the regenerative torque is decreased depending on the increase in the accelerator operation amount, while the fuel cut is maintained. Thereby, the negative acceleration of the vehicle 10 decreases toward zero. In other words, the deceleration of the vehicle speed decreases.

Thereafter, at time t12, the accelerator operation amount reaches the first accelerator operation amount (shows as TH1 in the figure), and thereby the ISG torque is switched from the regeneration to the powering, while the fuel cut is maintained.

Thereafter, at time t13, the accelerator operation amount reaches the second accelerator operation amount (shows as TH2 in the figure), and thereby the fuel cut is ended and the powering is ended. At time t13, the engine torque is generated, and the traveling by the engine torque is started. Further, by the generation of the engine torque, the total torque becomes a positive torque, and therefore the vehicle speed shifts from decrease to increase. Accordingly, the second accelerator operation amount is a threshold at which the values of the total torque and the acceleration are switched from negative values to positive values.

Thereafter, the accelerator operation amount further increases and becomes constant at time t14, and the vehicle speed increases by the engine torque depending on the accelerator operation amount.

In the second embodiment, in the case where the operation amount of the accelerator operation has reached the second accelerator operation amount, the regeneration amount may be temporarily increased to the predetermined maximal regeneration amount along with the end of the fuel cut. Thereby, similarly to the first embodiment, it is possible to cancel out the shock due to the sharp increase in the engine torque, by the regenerative torque, so that it is possible to improve the drivability.

As described above, in the embodiment, in the case where the accelerator operation has been performed during the execution of the fuel cut and the regeneration and where the operation amount of the accelerator operation is smaller than the first accelerator operation amount, the ECM 50 maintains the fuel cut, and decreases the regeneration amount of the regeneration depending on the increase in the operation amount of the accelerator operation. In the case where the operation amount of the accelerator operation is equal to or larger than the first accelerator operation amount, the ECM 50 ends the regeneration and performs the powering. Further, in the case where the operation amount of the accelerator operation is equal to or larger than the second accelerator operation amount that is larger than the first accelerator operation amount, the ECM 50 ends the fuel cut, and ends the powering.

Thereby, in the case where the accelerator operation has been performed at the time of the coast traveling of the vehicle 10, the regeneration amount decreases depending on the increase in the operation amount of the accelerator operation, and therefore it is possible to adjust the deceleration of the vehicle 10.

As a result, it is possible to adjust the deceleration while securing the regeneration amount.

Further, in the case where the accelerator operation amount is equal to or larger than the first accelerator operation amount and is smaller than the second accelerator operation amount, the fuel cut is maintained, and therefore it is possible to avoid the fuel consumption due to the end of the fuel cut and to restrain the fuel consumption amount. Furthermore, in the case where the accelerator operation amount is equal to or larger than the first accelerator operation amount and is smaller than the second accelerator operation amount, the powering is performed by the ISG 40, and therefore it is possible to weaken the deceleration of the vehicle 10.

Further, in the case where the operation amount of the accelerator operation is equal to or larger than the second accelerator operation amount that is larger than the first accelerator operation amount, the fuel cut is ended, and the powering is ended. Therefore, it is possible to smoothly transition from a state where the deceleration of the vehicle 10 has been weakened by the powering to a state where the vehicle 10 is accelerated by the engine torque.

The embodiments of the present invention have been disclosed. Naturally, alterations can be made by a person skilled in the art, without departing from the scope of the present invention. It is intended that all modifications and equivalents are included in the claims described below.

### [Reference Signs List]

10...vehicle, 20...engine, 40...ISG (rotating electric machine), 50...ECM (control unit)

## Claims

1. A control device for a vehicle (10), the control device being mounted on the vehicle (10), the vehicle (10) including an engine (20) and a rotating electric machine (40) capable of performing regeneration,
the control device comprising a control unit (50) that executes a fuel cut of the engine (20) and the regeneration of the rotating electric machine (40) at time of a coast traveling in which an accelerator operation is not performed,
the control device being **characterized in that**:
when the accelerator operation is performed during the execution of the fuel cut and the regeneration and an operation amount of the accelerator operation is smaller than a predetermined accelerator operation amount, the control unit (50) maintains the fuel cut, and decreases a regeneration amount of the regeneration depending on increase in the operation amount of the accelerator operation; and
when the operation amount of the accelerator operation reaches the predetermined accelerator operation amount, the control unit (50) ends the fuel cut, and increases the regeneration amount.

2. The control device for the vehicle (10) as claimed in claim 1, wherein the predetermined accelerator operation amount is set to an operation amount when the regeneration amount decreases to zero.

3. The control device for the vehicle (10) as claimed in claim 1 or 2, wherein:
the regeneration amount at the time of the coast traveling is set to a predetermined maximal regeneration amount; and
when the operation amount of the accelerator operation reaches the predetermined accelerator operation amount, the control unit (50) ends the fuel cut, and increases the regeneration amount to the maximal regeneration amount.

4. A control device for a vehicle (10), the control device being mounted on the vehicle (10), the vehicle (10) including an engine (20) and a rotating electric machine (40) capable of performing regeneration and powering,
the control device comprising a control unit (50) that executes a fuel cut of the engine and the regeneration of the rotating electric machine (40) at time of a coast traveling in which an accelerator operation is not performed,
the control device being **characterized in that**:
when the accelerator operation is performed during the execution of the fuel cut and the regeneration and an operation amount of the accelerator operation is smaller than a first accelerator operation amount, the control unit (50) maintains the fuel cut, and decreases a regeneration amount of the regeneration depending on increase in the operation amount of the accelerator operation;
when the operation amount of the accelerator operation is equal to or larger than the first accelerator operation amount, the control unit (50) ends the regeneration, and performs the powering; and
when the operation amount of the accelerator operation is equal to or larger than a second accelerator operation amount that is larger than the first accelerator operation amount, the control unit (50) ends the fuel cut, and ends the powering.

## Patentansprüche

1. Eine Steuervorrichtung für ein Fahrzeug (10), wobei die Steuervorrichtung an dem Fahrzeug (10) montiert ist, wobei das Fahrzeug (10) einen Motor (20) und eine rotierende elektrische Maschine (40) umfasst, die in der Lage ist, eine Regeneration durchzuführen,
die Steuervorrichtung eine Steuereinheit (50) aufweist, die eine Brennstoffabschaltung des Motors (20) und die Regeneration der rotierenden elektrischen Maschine (40) zu einem Zeitpunkt eines Bergabfahrens ausführt, bei dem ein Beschleunigungsbetrieb nicht durchgeführt wird,
wobei die Steuervorrichtung **dadurch gekennzeichnet ist, dass**:
wenn der Beschleunigungsbetrieb während der Ausführung der Brennstoffabschaltung und der Regeneration durchgeführt wird, und eine Betriebsgröße des Beschleunigungsbetriebs kleiner ist als eine vorbestimmte Beschleunigungsbetriebsgröße, dann hält die Steuereinheit (50) die Brennstoffabschaltung aufrecht und verringert eine Regenerationsgröße der Regeneration in Abhängigkeit von einer Zunahme der Betriebsgröße des Beschleunigungsbetriebs; und
wenn die Betriebsgröße des Beschleunigungsbetriebs die vorbestimmte Beschleunigungsbetriebsgröße erreicht, dann beendet die Steuereinheit (50) die Brennstoffabschaltung und die Regenerationsgröße nimmt zu.

2. Die Steuervorrichtung für das Fahrzeug (10) nach Anspruch 1, wobei die vorbestimmte Beschleunigungsbetriebsgröße auf eine Betriebsgröße eingestellt ist, wenn die Regenerationsgröße auf Null abnimmt.

3. Die Steuervorrichtung für das Fahrzeug (10) nach Anspruch 1 oder 2, wobei:
die Regenerationsgröße zu dem Zeitpunkt des Bergabfahrens auf eine vorbestimmte maximale Regenerationsgröße eingestellt wird; und
wenn die Betriebsgröße des Beschleunigungsbetriebs die vorbestimmte Beschleunigungsbetriebsgröße erreicht, dann beendet die Steuereinheit (50) die Brennstoffabschaltung, und die Regenerationsgröße nimmt auf die maximale Regenerationsgröße zu.

4. Eine Steuervorrichtung für ein Fahrzeug (10), wobei die Steuervorrichtung an dem Fahrzeug (10) montiert ist, wobei das Fahrzeug (10) einen Motor (20) und eine rotierende elektrische Maschine (40) umfasst, die in der Lage ist, eine Regeneration und eine Stromerzeugung durchzuführen,
die Steuervorrichtung eine Steuereinheit (50) aufweist, die eine Brennstoffabschaltung des Motors und die Regeneration der rotierenden elektrischen Maschine (40) zu einem Zeitpunkt eines Bergabfahrens ausführt, bei dem ein Beschleunigungsbetrieb nicht durchgeführt wird,
wobei die Steuervorrichtung **dadurch gekennzeichnet ist, dass**:
wenn der Beschleunigungsbetrieb während der Ausführung der Brennstoffabschaltung und der Regeneration durchgeführt wird, und eine Betriebsgröße des Beschleunigungsbetriebs kleiner ist als eine erste Beschleunigungsbetriebsgröße, dann hält die Steuereinheit (50) die Brennstoffabschaltung aufrecht und verringert eine Regenerationsgröße der Regeneration in Abhängigkeit von einer Zunahme der Betriebsgröße des Beschleunigungsbetriebs;
wenn die Betriebsgröße des Beschleunigungsbetriebs gleich oder größer ist als die erste Beschleunigungsbetriebsgröße, dann beendet die Steuereinheit (50) die Regeneration und führt die Stromerzeugung durch; und
wenn die Betriebsgröße des Beschleunigungsbetriebs gleich oder größer ist als eine zweite Beschleunigungsbetriebsgröße, die größer ist als die erste Beschleunigungsbetriebsgröße, dann beendet die Steuereinheit (50) die Brennstoffabschaltung und beendet die Stromerzeugung.

## Revendications

1. Dispositif de commande pour un véhicule (10), le dispositif de commande étant monté sur le véhicule (10), le véhicule (10) comportant un moteur (20) et une machine électrique tournante (40) capable d'effectuer une régénération,
le dispositif de commande comprenant une unité de commande (50) qui exécute une coupure de carburant du moteur (20) et la régénération de la machine électrique tournante (40) lors d'un déplacement en roue libre au cours duquel un actionnement d'accélérateur n'est pas effectué,
le dispositif de commande étant **caractérisé en ce que** :
lorsque l'actionnement d'accélérateur est effectué pendant l'exécution de la coupure de carburant et de la régénération et une quantité d'actionnement de l'actionnement d'accélérateur est inférieure à une quantité d'actionnement d'accélérateur prédéterminée, l'unité de commande (50) maintient la coupure de carburant, et diminue une quantité de régénération de la régénération en fonction de l'augmentation de la quantité d'actionnement de l'actionnement d'accélérateur ; et
lorsque la quantité d'actionnement de l'actionnement d'accélérateur atteint la quantité d'actionnement d'accélérateur prédéterminée, l'unité de commande (50) met fin à la coupure de carburant, et augmente la quantité de régénération.

2. Dispositif de commande pour le véhicule (10) selon la revendication 1, dans lequel la quantité d'actionnement d'accélérateur prédéterminée est établie à une quantité d'actionnement lorsque la quantité de régénération diminue vers zéro.

3. Dispositif de commande pour le véhicule (10) selon la revendication 1 ou 2, dans lequel :
la quantité de régénération au moment du déplacement en roue libre est établie à une quantité de régénération maximale prédéterminée ; et
lorsque la quantité d'actionnement de l'actionnement d'accélérateur atteint la quantité d'actionnement d'accélérateur prédéterminée, l'unité de commande (50) met fin à la coupure de carburant, et augmente la quantité de régénération jusqu'à la quantité de régénération maximale.

4. Dispositif de commande pour un véhicule (10), le dispositif de commande étant monté sur le véhicule (10), le véhicule (10) comportant un moteur (20) et une machine électrique tournante (40) capable d'effectuer une régénération et une alimentation en énergie,
le dispositif de commande comprenant une unité de commande (50) qui exécute une coupure de carburant du moteur et la régénération de la machine électrique tournante (40) lors d'un déplacement en roue libre au cours duquel un actionnement d'accélérateur n'est pas effectué,
le dispositif de commande étant **caractérisé en ce que** :
lorsque l'actionnement d'accélérateur est effectué pendant l'exécution de la coupure de carburant et de la régénération et une quantité d'actionnement de l'actionnement d'accélérateur est inférieure à une première quantité d'actionnement d'accélérateur, l'unité de commande (50) maintient la coupure de carburant, et diminue une quantité de régénération de la régénération en fonction de l'augmentation de la quantité d'actionnement de l'actionnement d'accélérateur ;
lorsque la quantité d'actionnement de l'actionnement d'accélérateur est égale ou supérieure à la première quantité d'actionnement d'accélérateur, l'unité de commande (50) met fin à la régénération, et effectue l'alimentation en énergie ; et
lorsque la quantité d'actionnement de l'actionnement d'accélérateur est égale ou supérieure à une deuxième quantité d'actionnement d'accélérateur qui est supérieure à la première quantité d'actionnement d'accélérateur, l'unité de commande (50) met fin à la coupure de carburant, et met fin à l'alimentation en énergie.
